# EUROPÄISCHE PATENTSCHRIFT

(11) **EP 0 674 146 B1**
(45) Veröffentlichungstag und Bekanntmachung des Hinweises auf die Patenterteilung: **13.05.1998**
(21) Anmeldenummer: 95890032.6
(22) Anmeldetag: 14.02.1995
(51) Int. Cl.: F27B 9/02, F27B 9/10, F27B 9/26, B28B 11/00, F26B 15/16

(54) **Vorrichtung zum Trocknen und bzw. oder Brennen von keramischem Gut**
Drying and/or firing installation for ceramic products
Installation pour le séchage et/ou la cuisson de produits céramiques

(30) Priorität: 18.03.1994 AT 577/94
(43) Veröffentlichungstag der Anmeldung: 27.09.1995
(73) Patentinhaber: EICHHORN EPL AG, CH-6343 Rotkreuz (CH)
(72) Erfinder: Zipfinger, Erwin, Ing., A-3363 Neufurth (AT)
(74) Vertreter: Müllner, Erwin, Dr.

(56) Entgegenhaltungen:
- EP-A- 0 042 372
- EP-A- 0 361 147
- DE-A- 3 321 673
- DE-A- 3 423 894
- DE-C- 238 331
- DE-U- 9 101 990
- GB-A- 443 147
- US-A- 4 956 271

## Beschreibung

Die Erfindung betrifft eine Vorrichtung zum Trocknen und bzw. oder Brennen von keramischem Gut, insbesondere von Lochziegeln, mit einem Durchlauftrockner bzw. -ofen, der über Kanäle zur Heißluft-, Kaltluft- oder Mischluftzufuhr, -ableitung oder -umleitung, sowie über Trocken- bzw. Brennzonen und über entlang von Gestellen, gegebenenfalls in mehreren Etagen übereinander geführte Transportwagen zum schrittweisen oder kontinuierlichen Durchführen des keramischen Gutes durch die Zonen verfügt.

Aus der US-PS 1 268 535 sind Trockner bekannt, die als Kammern ausgebildet und durch Zwischenwände in mehrere Trockenzonen gegliedert sind, welche von Transportwagen mit dem zu trocknenden Gut durchfahren werden. Die Transportwagen sind stirnseitig abgeschottet. Die Trockenluft wird durch die Transportwagen hindurchgeblasen und von Kammer zu Kammer in einer Schlangenlinie geführt. Es sind große Luftvolumina erforderlich, um ein gleichmäßiges Trocknungsergebnis zu erzielen.

Aus der DE-OS 33 21 671 ergibt sich ein Durchlauftrockner, innerhalb dessen Wänden die Trockenluft zirkuliert. Von Zone zu Zone ist ein individuelles Konditionieren der Trockenluft erforderlich, um sie dem Trockenfortschritt des Trockengutes schrittweise anzupassen. Ferner ist es bekannt, bei einem Durchlauftrockner im Gegenstromprinzip zu arbeiten, wobei eine Belüftung auch von der Seite erfolgt. Die Heißluftführung erfolgt bei anderen bekannten Ausführungen, etwa gemäß der DE-PS 39 41 134, innerhalb eines allseitig geschlossenen Trockners oder Ofens durch Strömungsumlenkung in horizontaler und vertikaler Richtung über mehrere Etagen, die nacheinander durchströmt werden. Es muß bei diesen Ausführungen ein komplexer, geschlossener Baukörper errichtet werden, dessen Wände dem Trocknungsprozeß wie auch dem Brennvorgang Wärme entziehen.

Aus der DE-C1-38 32 734 sowie auch aus der GB-A-152 505 sind Öfen bzw. Trockner bekannt, bei welchen die Wände der Transportwagen als Ofenwandung oder als Teil der Ofenwandung herangezogen werden. Ferner zählen rostartige Auflageflächen für Ziegel beim Trocknungs- oder Brennvorgang auf Grund der EP-A1-0 042 372 und der DE-A-1 927 839 zum Stand der Technik.

Die Erfindung zielt darauf ab, die Luftströmung auf das Trocken- oder Brenngut zu konzentrieren und die Energiebilanz durch geringe Wärmeverluste zu optimieren. Dies erfolgt bei einer Vorrichtung bzw. Anlage der einleitend beschriebenen Art erfindungsgemäß dadurch, daß die Transportwagen längs ihres Umfanges kastenartig geschlossene und gegebenenfalls thermisch isolierende Seitenwände aufweisen, die an die Seitenwände allenfalls weiterer in den Gestelletagen darüber und bzw. oder darunter vorgesehener Transportwagen dichtend anschließen und die den Mantel des Trockners oder Brennofens bzw. einer Zone desselben bilden und daß an den Mantel bzw. den dadurch entstehenden Schacht nach oben bzw. unten die Heißluft-, Kaltluft- oder Mischluftzuleitungen, --ableitungen oder -umleitungen dichtend anschließen. Dadurch bilden die rahmenartig die Transportwagen umgebenden Seitenwände die Luftführungskanalwände. Es befinden sich die Transportwagen somit nicht in einem Strömungskanal, sondern leiten in ihrem Inneren selbst die Strömung. Es müssen also weder die Trokkengestelle, in welchen die Transportwagen z.B. auf Schienen geführt sind, noch die Wände bzw. Wandverkleidungen des Trockners oder Ofens erwärmt werden. Diese Wände können zur Gänze entfallen, wodurch die gesamte Anlage einfacher, kostengünstiger und besser zugänglich wird. Die thermische Verlustleistung wird auf diese Weise sehr gering gehalten, denn die thermisch wirksame Strömung, sei es beim Trocknen oder beim Brennen, kommt im wesentlichen nur mit jenen Objekten in Berührung, die getrocknet oder gebrannt werden sollen. Eine erfindungsgemäße Vorrichtung umfaßt daher feststehende Luftführungsleitungen mit Zu- und Ableitungsanschlüssen, zwischen welche jeweils ein Transportwagen bzw. eine Mehrzahl von Transportwagen geschoben wird. Nach einer Verweilzeit von z.B. 10 Minuten rückt der Transportwagen um einen Schritt weiter zwischen die nächsten Zu- und Ableitungsanschlüsse der Heißluftführungskanäle usw.

Eine besondere Ausführung ist dadurch gekennzeichnet, daß die Ladefläche jedes Transportwagens quer zur Durchlaufrichtung des Trockners oder Brennofens durch eine Trennwand unterteilt ist und daß die gegebenenfalls thermisch isolierende Trennwand nach oben oder unten an Trennwände weiterer Transportwagen bzw. an Luftführungsleitungen dichtend anschließt. Da der Trockner oder Ofen in mehrere, z.B. zehn hintereinander liegende Zonen unterteilt ist, in die schrittweise jeder Transportwagen der Kette gelangt, kann ein Transportwagen oder können zwei Transportwagen bzw. eine Mehrzahl jeweils in einer Zone liegen oder aber bei großen Transportwagen kann die Ladung immer zwei Zonen zugeordnet sein. Wie oben erwähnt, ist die Ladefläche dann durch die gegebenenfalls thermisch isolierende Trennwand geteilt, sodaß sich zwei nebenenanderliegende Rahmen bilden, die jeweils den Mantel einer Zone bilden. Ein zweckmäßiges Ausführungsbeispiel ist dadurch gekennzeichnet, daß die in einer Ebene oder in mehreren Etagen übereinander angeordnete Transportwagen an sich bekannte rostartige Auflageflächen für vorzugsweise jeweils eine Lage von Lochziegeln mit vertikal orientierten Löchern aufweisen, und daß die durch die geschlossenen Seitenwände dieser Transportwagen gebildeten vertikalen Schächte in Durchlaufrichtung des Trockners oder Brennofens hintereinander liegen und paarweise oben und - um jeweils einen Schacht versetzt - auch unten zur Bildung einer mäanderförmigen Luftströmung durch Luftführungskanäle verbunden sind. Diese jeweils durch die Seitenwände eines oder mehrerer übereinander geführter Transportwagen gebildeten Trockner- oder Ofenschächte werden also in Serie geschaltet und die Transportwagen werden z.B. in vier oder fünf Etagen übereinander schrittweise von Zone zu Zone im Gegenstrom durch die Anlage gefahren. Dabei wird das Gut mit immer heißerer und immer trockener Luft konfrontiert. Eine alternative Ausführungsform ist dadurch gekennzeichnet, daß die in einer Ebene oder in mehreren Etagen übereinander angeordneten Transportwagen an sich bekannte rostartige Auflageflächen für vorzugsweise jeweils eine Lage von Lochziegeln mit vertikal orientierten Löchern aufweisen, daß diese Transportwagen durch ihre geschlossenen Seitenwände vertikale Schächte bilden, daß jeweils zwei nebeneinander liegende Schächte oben und unten durch Luftführungskanäle und ein Gebläse zur Luftführung im Kreis verbunden sind und so eine Trockner- oder Brennofeneinheit bilden. Es zirkulieren daher die Trockenluft bzw. die Heißgase für das Brennen jeweils durch zwei von den Transportwagen-Seitenwänden gebildeten Schächte, die oben und unten "kurzgeschlossen" sind. Ein Gebläse sorgt für den Luftumlauf in dieser Trockner- oder Brennofeneinheit. Bei dieser Ausführung ist es vorteilhaft, wenn mehrere Trockner- oder Brennofeneinheiten hintereinander angeordnet sind und wenn als Verbindung zwischen diesen Einheiten Luftabzweigkanäle vorgesehen sind. Die Übergangsquerschnitte werden z.B. durch Klappen so bemessen, daß sich Heißluftzufuhr und -abfuhr in jedem Kreislauf bzw. jeder Stufe die Waage halten. Die Gesamtanordnung ist für einen Brennofen in vorteilhafter Weise so getroffen, daß eine Heißgasleitung eines Brenners an den Kreislauf einer Trockner- oder Brennofeneinheit angeschlossen ist und daß von deren Kreislauf Abzweigluft in den Kreislauf einer nächsten Einheit und von dieser in den Kreislauf einer weiteren Einheit geführt wird, daß die Durchlaufrichtung der Transportwagen durch den Trockner oder Brennofen der Strömungsrichtung von Einheit zu Einheit entgegengerichtet ist, und daß an die vom Heißgasbrenner gespeiste Einheit, in Durchlaufrichtung der Transportwagen gesehen, mindestens eine Abkühleinheit anschließt, deren Abluft gegebenenfalls dem Brenner zuführbar ist.

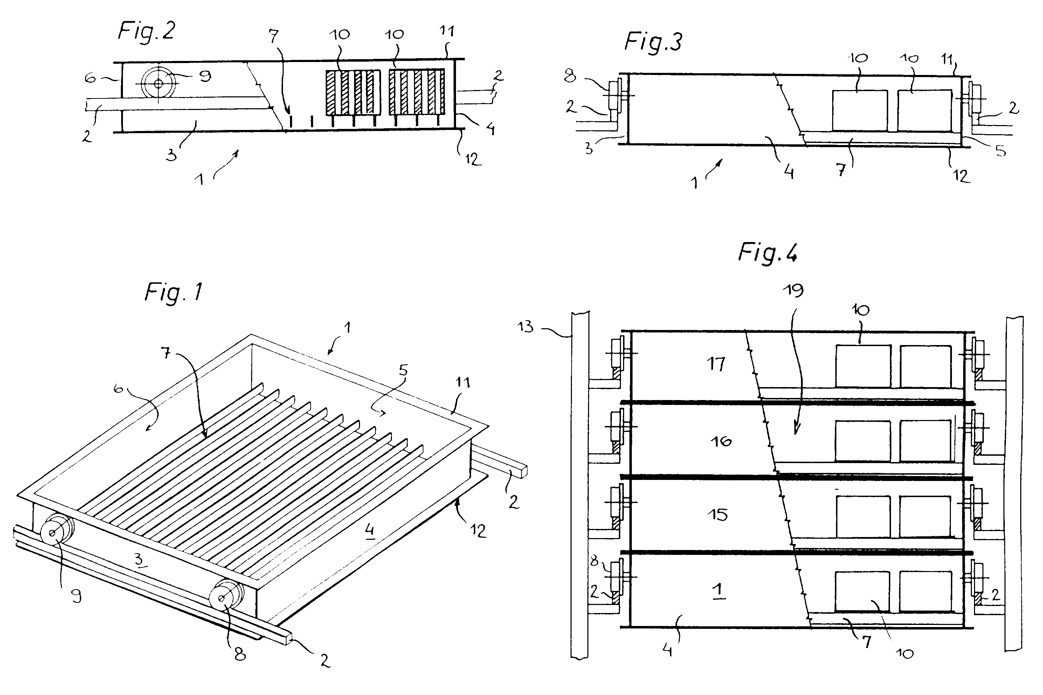

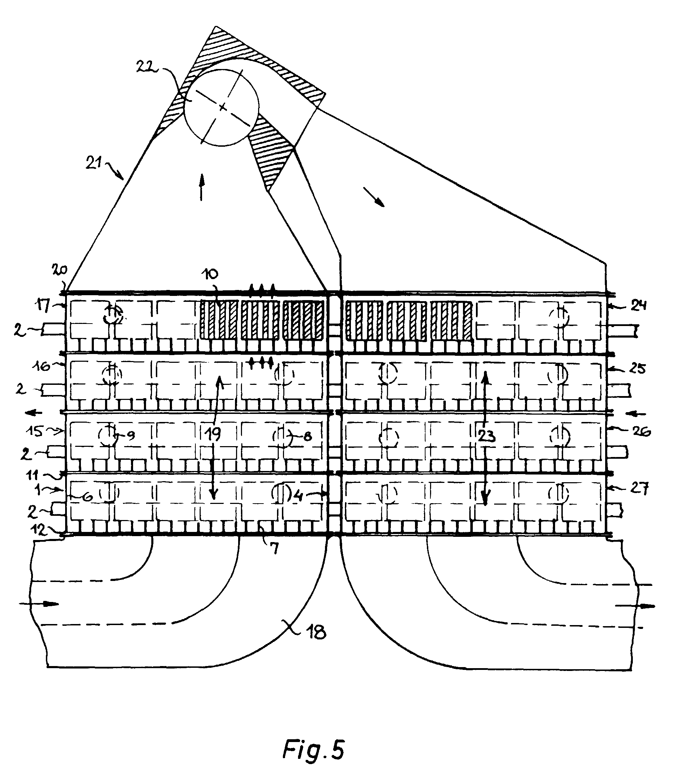

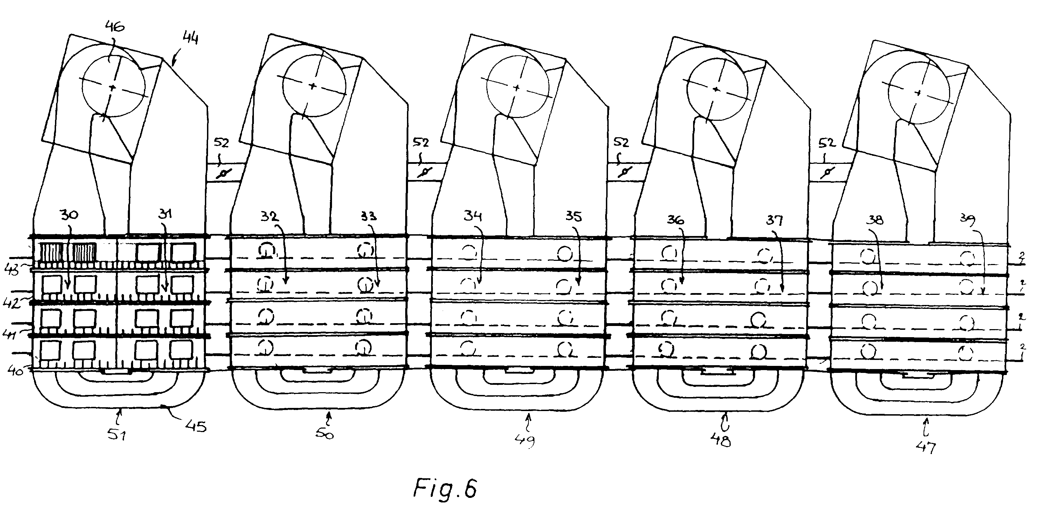

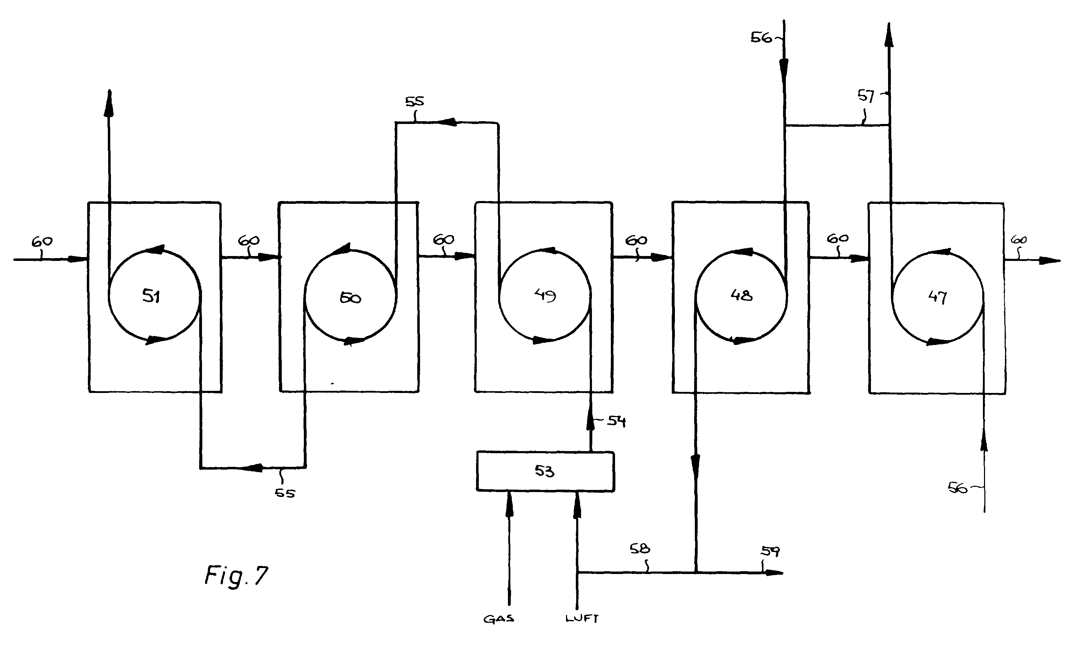

Ausführungsbeispiele des Erfindungsgegenstandes sind in den Zeichnungen dargestellt. Fig. 1 zeigt einen Transportwagen für Lochziegeln im Schrägriß, der einen Trockner oder Brennofen durchläuft, Fig. 2 den Transportwagen von der Seite, teilweise geschnitten, Fig. 3 den Transportwagen von vorne, teilweise geschnitten, Fig. 4 mehrere Transportwagen in Etagen in einem Trocknergestell übereinander, Fig. 5 einen Querschnitt durch zwei nebeneinander liegende von Transportwagen gebildete Schächte mit oben und unten anschließenden Luftführungskanälen, Fig. 6 paarweise zu jeweils einer Einheit zusammengeschlossene Schächte mit Gebläse für die Zirkulation der Luft, insbesondere Heißluft für das Brennen und Fig. 7 eine Prinzipdarstellung der von einem Brenner mit Heißgas versorgten Einheiten nach Fig. 6 mit Luftabzweig- und Überleitungskanälen.

Kernstück eines Trockners oder Brennofens für keramische Formkörper, insbesondere Lochziegel, sind Transportwagen 1, die auf Schienen 2 in mehreren Etagen durch den Trockner oder Brennofen geschoben werden. Der Transportwagen 1 weist einen die Seitenwände 3, 4, 5, 6 bildenden geschlossenen kastenartigen Rahmen auf, der einen Rost 7 aus hochgestellten Flacheisenprofilstäben umgibt. An den Seitenwänden 3 und 5 sind Rollen 8, 9 angeordnet. Der Transportwagen 1 nimmt eine Lage von Lochziegeln 10 auf, die mit ihren Löchern in vertikaler Anordnung auf den Rost 7 gestellt werden (Fig. 2). Die Seitenwände 3, 4, 5 und 6 gehen oben und unten in einen umlaufenden Flansch 11, 12 über. Wie Fig. 4 zeigt, sind in einem Gestell 13 auf Schienen 2 in vier Etagen übereinander vier Transportwagen 1, 15, 16 und 17 geführt. Die Flansche der einzelnen Transportwagen liegen dichtend aneinander. In Fahrtrichtung der Transportwagen können die Flansche auch mit ineinander greifenden Labyrinthdichtungen ausgestattet sein. In dieser Position der Transportwagen 1, 15, 16 und 17 gemäß Fig. 4 bilden die Seitenwände 3, 4, 5, 6 und die unmittelbar darüberliegenden Seitenwände einen dichten Mantel des Trockners oder Brennofens, der die Ziegel 10 umgibt. Der Mantel begrenzt einen Schacht 19.

In Fig. 5 ist diese Gruppe von Transportwagen 1, 15, 16, 17 nochmals im Längsschnitt dargestellt. Sie befindet sich in einer Position, in der ein Heißluftkanal 18 direkt der unteren Öffnung des Transportwagens 1 gegenüberliegt und an dessen Flansch 12 dichtend anschließt. Der Heißluftkanal 18 setzt sich somit in dem durch den Mantel der Seitenwände der Transportwagen 1, 15, 16 und 17 gebildeten Schacht 19 fort, der oben dichtend durch Flansche 20 in einen Umleitungskanal 21 übergeht. In diesem befindet sich ein Gebläse 22. Der Umleitungskanal 21 schließt an die obere Öffnung eines Schachtes 23 an, welchem die ident zum Transportwagen 1 ausgeführten Transportwagen 24, 25, 26 und 27 bilden. Die von einem Wärmetauscher kommende durchströmende Heißluft durchsetzt im Schacht 19 und 23 die Löcher der Lochziegel 10 und streicht an den Außenfläche der Lochziegel 10 vorbei, wobei ein intensiver Trocknungseffekt eintritt. Mehrere Baugruppen gemäß Fig. 5 schließen aneinander, sodaß sich ein Durchlauftrockner ergibt. Die Transportwagen werden von rechts nach links schrittweise weitergeschoben. Die Heißluft strömt von links nach rechts, nimmt Feuchtigkeit auf und kühlt nach und nach ab. Der Durchlauftrockner arbeitet somit im Gegenstromprinzip. Außerhalb des Trockner werden vier Transportwagen mit Lochziegeln beladen und dann in den Durchlauftrockner eingeschoben. Es schließen im Inneren des Durchlauftrockners beispielsweise zehn Baugruppen nach Fig. 5 aneinander. Die Taktzeit bzw. Verweilzeit einer Gruppe von vier übereinander befindlichen Transportwagen in einer Position beträgt beispielsweise 5 Minuten, sodaß eine eingeschobene Vierergruppe von Transportwagen den Durchlauftrockner nach 20 Schritten von je 5 Minuten verläßt. Die aus dem Durchlauftrockner ausgeschobenen Transportwagen werden entladen und die Gruppe leerer Transportwagen wird über einen äußeren Schienenstrang zur Beladestation am Eingang des Durchlauftrockners geschoben.

Wenn die Seitenwände 3, 4, 5 und 6 der Transportwagen 1 bzw. 15, 16, 17, 24, 25, 26, 27 aus hitzebeständigem wärmeisolierendem Material bestehen, dann kann nach diesem Prinzip auch ein Brennofen für die Lochziegeln betrieben werden. Die Temperaturen sind höher als im Trockner und die Verweilzeiten bzw. Taktzeiten dem Brennen von keramischen Massen angepaßt. Einem Trockner kann ein Brennofen nachgeschaltet sein. Dabei können die mit hitzebeständigem, wärmeisolierendem Material aufgebauten Transportwagen bereits im Durchlauf durch den Trockner verwendet und dann weiter in den Brennofen eingeschoben werden. Es kann aber auch nach dem Trocknen von Wagen aus Stahlblech auf solche mit hitzefestem, wärmeisolierendem Material für die Seitenwände der Wagen umgeladen werden. Die Fig. 6 zeigt schematisch Schächte 30, 31, 32, 33-39, die ebenso aus den Seitenwänden von dicht übereinander geführten Transportwagen 40, 41, 42, 43 gebildet werden, wie dies die Fig. 4 zeigt. Zum Unterschied von den Transportwagen 1 sind diese mittig unterteilt und nehmen Ziegel auf, die in jeweils zwei Schächten 30, 31 nebeneinander liegen. Die Abstände und Abmessungen der Anlage und der Wagen sind so getroffen, daß bei Vorrücken der Transportwagen um eine jeweils halbe Transportwagenlänge 40, 41, 42, 43 die sich ergebenden Schächte 30, 31-39 immer mit den Luftführungkanälen 44 bzw. Umleitungskanälen 45 fluchten. In den Luftführungskanälen 44 sind Gebläse 46 vorgesehen, die die Zirkulation von Heißluft in den Kreisläufen (Schacht 30 - Luftführungskanale 41 - Schacht 31 - Umleitungskanal 45) aufrechterhalten. In Fig. 6 sind fünf Einheiten 47, 48, 49, 50, 51 mit je zwei Schächten 30, 31 usw. dargestellt. Die Einheit 47 wird mittels eines Brenners mit Heißluft versorgt und in Zirkulation gehalten. Ein Teil der Heißluft gelangt über einen Abzweigkanal 52 mit Regelklappe in die Einheit 48 und analog in die weiteren Einheiten 49, 50 und 51. Der Durchlauf der Transportwagen 40, 41, 42, 43 erfolgt von links nach rechts, also im Gegenstromprinzip.

Fig. 7 zeigt ein Schaltbild für eine Anordnung der fünf Einheiten 47-51 in anderer Kombination. Ein Brenner 53 eines Brennofens produziert Heißluft 54, mit der die Einheit 49 gespeist wird. Die Einheiten 50, 51 werden über Abzweigkanäle 55 mit Heißluft aus den jeweils vorgeschalteten Einheiten versorgt. Die Einheiten 47 und 48 werden mit Frischluft 56 versorgt, wobei ein Teil der Abluft 57 der Einheit 47 der Frischluft 56 der Einheit 48 zugemischt wird. Ein Teil der Abluft 58 der Einheit 48 wird an den Eingang des Brenners 53 sowie an einen Trockner 59 geleitet. Die Transportwagen durchlaufen die Anlage in Richtung der Pfeile 60. Auch bei einem Brennofen der hier im Prinzip dargestellten Anordnung werden die Transportwagen nach Einheit 47 entladen und auf Rückführschienen an den Ausgangspunkt zum Eingang des Ofens zwecks Beladung geschoben. Die Transportwagen werden an eine umlaufende Laufkette angekuppelt und schrittweise durch den Trockner oder den Ofen gefördert. Die Rückführung der leeren Transportwagen erfolgt beschleunigt.

## Patentansprüche

1. Vorrichtung zum Trocknen und bzw. oder Brennen von keramischem Gut, insbesondere von Lochziegeln, mit einem Durchlauftrockner bzw. -ofen, der über Kanäle zur Heißluft-, Kaltluft- oder Mischluftzuleitung, -ableitung oder -umleitung sowie über Trocken- bzw. Brennzonen und über entlang von Gestellen, gegebenenfalls in mehreren Etagen übereinander geführte Transportwagen zum schrittweisen oder kontinuierlichen Durchführen des keramischen Gutes durch die Zonen verfügt, **dadurch gekennzeichnet,** daß die Transportwagen (1, 15, 16, 17, 24-27, 40-43) längs ihres Umfanges kastenartig geschlossene und gegebenenfalls thermisch isolierende Seitenwände (3, 4, 5, 6) aufweisen, die an die Seitenwände allenfalls weiterer in den Gestelletagen darüber und bzw. oder darunter vorgesehener Transportwagen (1, 15, 16, 17, 24-27, 40-43) dichtend anschließen und die den Mantel des Trockners oder Brennofens bzw. einer Zone desselben bilden und daß an den Mantel bzw. den dadurch entstehenden Schacht (19, 23, 30-39) nach oben bzw. unten die Heißluft-, Kaltluft- oder Mischluftzuleitungen, -ableitungen oder -umleitungen (18, 21, 44, 45) dichtend anschließen.

2. Vorrichtung nach Anspruch 1, **dadurch gekennzeichnet,** daß die Ladefläche jedes Transportwagens (1, 15, 16, 17, 24-27, 40-43) quer zur Durchlaufrichtung des Trockners oder Brennofens durch eine Trennwand unterteilt ist und daß die gegebenenfalls thermisch isolierende Trennwand nach oben und unten an Trennwände weiterer Transportwagen bzw. an Luftführungsleitungen dichtend anschließt.

3. Vorrichtung nach den Ansprüchen 1 oder 2, **dadurch gekennzeichnet,** daß die in einer Ebene oder in mehreren Etagen übereinander angeordnete Transportwagen (1, 15, 16, 17, 24-27) an sich bekannte rostartige Auflageflächen (7) für vorzugsweise jeweils eine Lage von Lochziegeln (10) mit vertikal orientierten Löchern aufweisen, und daß die durch die geschlossenen Seitenwände (3, 4, 5, 6) dieser Transportwagen (1, 15, 16, 17, 24-27) gebildeten vertikalen Schächte (19, 23) in Durchlaufrichtung des Trockners oder Brennofens hintereinander liegen und paarweise oben und - um jeweils einen Schacht versetzt - auch unten zur Bildung einer mäanderförmigen Luftströmung durch Luftführungskanäle (18, 21) verbunden sind. (Fig. 5)

4. Vorrichtung nach den Ansprüchen 1 oder 2, **dadurch gekennzeichnet,** daß die in einer Ebene oder in mehreren Etagen übereinander angeordneten Transportwagen (40-43) an sich bekannte rostartige Auflageflächen (7) für vorzugsweise jeweils eine Lage von Lochziegeln (10) mit vertikal orientierten Löchern aufweisen, daß diese Transportwagen (40-43) durch ihre geschlossenen Seitenwände (3, 4, 5, 6) vertikale Schächte (30-39) bilden, daß jeweils zwei nebeneinander liegende Schächte (30,31; 32, 33; 34, 35; 36, 37; 38, 39) oben und unten durch Luftführungskanäle (44, 45) und ein Gebläse (46) zur Luftführung im Kreis verbunden sind und so eine Trockner- oder Brennofeneinheit (47, 48, 49, 50, 51) bilden. (Fig. 6)

5. Vorrichtung nach Anspruch 4, **dadurch gekennzeichnet,** daß mehrere Trockner- oder Brennofeneinheiten (47-51) hintereinander angeordnet sind und daß als Verbindung zwischen diesen Einheiten Luftabzweigkanäle (52) vorgesehen sind.

6. Vorrichtung nach den Ansprüche 4 und 5, **dadurch gekennzeichnet,** daß eine Heißgasleitung (54) eines Brenners (53) an den Kreislauf einer Trockner- oder Brennofeneinheit (49) angeschlossen ist und daß von deren Kreislauf Abzweigluft (55) in den Kreislauf einer nächsten Einheit (50) und von dieser in den Kreislauf einer weiteren Einheit (51) geführt wird, daß die Durchlaufrichtung (60) der Transportwagen durch den Trockner oder Brennofen der Strömungsrichtung von Einheit zu Einheit (47-51) entgegengerichtet ist, und daß sich an die vom Heißgasbrenner (53) gespeiste Einheit (49), in Durchlaufrichtung (60) der Transportwagen gesehen, mindestens eine Abkühleinheit (47, 48) anschließt, deren Abluft (58) gegebenenfalls dem Brenner (53) zuführbar ist. (Fig. 7)

## Claims

1. Apparatus for drying and/or firing ceramic material, in particular perforated bricks, with a continuous drier or kiln which has channels for the supply, removal or circulation ducts of hot air, cold air or mixed air as well as drying or firing zones and transport carriages guided along supports, if necessary on several levels one above the other, for stepwise or continuous passage of the ceramic material through the zones, characterised in that the transport carriages (1, 15, 16, 17, 24-27, 40-43) comprise side walls (3, 4, 5, 6) which are closed in box fashion along their periphery and if necessary thermally insulating and which sealingly adjoin the side walls of possibly further transport carriages (1, 15, 16, 17, 24-27, 40-43) provided on the support levels above and/or below and which form the casing of the drier or firing kiln or a zone thereof, and in that the supply, removal or circulation ducts of hot air, cold air or mixed air (18, 21, 44, 45) sealingly adjoin the casing or the resulting shaft (19, 23, 30-39) at the top or bottom.

2. Apparatus according to claim 1, characterised in that the loading surface of each transport carriage (1, 15, 16, 17, 24-27, 40-43) is divided by a partition transversely to the direction of travel through the drier or firing kiln and in that the partition, which if necessary is thermally insulating, sealingly adjoins partitions of further transport carriages or air conducting ducts at the top and bottom.

3. Apparatus according to claim 1 or 2, characterised in that the transport carriages (1, 15, 16, 17, 24-27) arranged in one plane or on several levels one above the other comprise grate-like supporting surfaces (7) known in the art for preferably one layer each of perforated bricks (10) with vertically oriented holes, and in that the vertical shafts (19, 23) formed by the closed side walls (3, 4, 5, 6) of these transport carriages (1, 15, 16, 17, 2427) are located one behind the other in the direction of travel through the drier or firing kiln and connected in pairs at the top and, in each case offset by one shaft, also at the bottom by air conducting channels (18, 21) to form a meandering air stream (Fig. 5).

4. Apparatus according to claim 1 or 2, characterised in that the transport carriages (40-43) arranged in one plane or on several levels one above the other comprise grate-like supporting surfaces (7) known in the art for preferably one layer each of perforated bricks (10) with vertically oriented holes, in that these transport carriages (40-43) by their closed side walls (3, 4, 5, 6) form vertical shafts (30-39), in that in each case two adjacent shafts (30, 31; 32, 33; 34, 35; 36, 37; 38, 39) are connected at the top and bottom by air conducting channels (44, 45) and a fan (46) for air conduction in a circuit and so form a drier or firing kiln unit (47, 48, 49, 50, 51) (Fig. 6).

5. Apparatus according to claim 4, characterised in that several drier or firing kiln units (47-51) are arranged one behind the other and in that air branch channels (52) are provided as a connection between these units.

6. Apparatus according to claims 4 and 5, characterised in that a hot gas duct (54) of a burner (53) is connected to the circuit of a drier or firing kiln unit (49) and in that from the circuit thereof branch air (55) is conducted into the circuit of a following unit (50) and from the latter into the circuit of a further unit (51), in that the direction (60) of travel of the transport carriages through the drier or firing kiln is opposite the direction of flow from one unit to the next (47-51), and in that the unit (49) supplied by the hot gas burner (53) adjoins, as seen in the direction of travel (60) of the transport carriages, at least one cooling unit (47, 48) of which the outgoing air (58) if necessary is able to be supplied to the burner (53) (Fig. 7).

## Revendications

1. Dispositif pour sécher et/ou soumettre à la cuisson un produit céramique, en particulier des briques creuses ou perforées, comprenant un sécheur ou un four, à passage continu et qui dispose de canaux d'amenée, d'évacuation ou de dérivation, respectivement pour l'air chaud, pour l'air froid ou pour l'air mélangé, ainsi que de zones de séchage ou de cuisson le long de chassis, le cas échéant dans des chariots de transport guidés les uns au-dessus des autres, en plusieurs étages, pour réaliser, par étapes ou en continu, le produit céramique à travers ces zones, caractérisé
en ce que les chariots de transport (1, 15, 16, 17, 24 à 27, 40 à 43) présentent le long de leur périphérie des parois latérales (3, 4, 5, 6) fermées en caisson et le cas échéant thermiquement isolantes, parois latérales qui sont reliées de façon étanche aux parois latérales des chariots de transport (1, 15, 16, 17, 24 à 27, 40 à 43) prévus éventuellement plus loin sur les étages de support au-dessus et/ou au-dessous et qui forment l'enveloppe du sécheur ou du four de cuisson ou une zone de ceux-ci, et en ce que sur l'enveloppe ou le puits (19, 23, 30 à 39) qui en résulte, sont reliées de manière étanche vers le haut ou vers le bas les conduites d'alimentation, d'évacuation ou de dérivation (18, 21, 44, 45), respectivement pour l'air chaud, pour l'air froid ou pour l'air mélangé.

2. Dispositif selon la revendication 1, caractérisé en ce que la surface de charge de chaque chariot de transport (1, 15, 16, 17, 24 à 27, 40 à 43) est subdivisée transversalement à la direction de passage du sécheur ou du four de cuisson, par une paroi de séparation et en ce que la paroi de séparation, le cas échéant thermiquement isolante, est reliée de façon étanche vers le haut et vers le bas aux parois de séparation d'autres chariots de transport ou à des conduites de guidage d'air.

3. Dispositif selon les revendications 1 ou 2, caractérisé en ce que les chariots de transport (1, 15, 16, 17, 24 à 27), disposés dans un plan ou en plusieurs étages, les uns au-dessus des autres, comportent des surfaces d'appui (7) du genre grille et connues en elles-mêmes, pour de préférence chaque fois une couche de briques creuses ou perforées (10) dont les trous sont orientés verticalement, et en ce que les puits verticaux (19, 23) formés par les parois latérales fermées (3, 4, 5, 6) de ces chariots de transport (1, 15, 16, 17, 24 à 27) sont disposés les uns derrière les autres dans la direction de passage dans le sécheur ou le four de cuisson et sont reliés par paires, par l'intermédiaire des canaux de guidage d'air (18, 21), en haut et - en étant décalés chaque fois d'un puits - également en bas pour former un écoulement d'air en méandre (figure 5).

4. Dispositif selon les revendications 1 ou 2, caractérisé en ce que les chariots de transport (40 à 43) disposés dans un plan ou les uns au-dessus des autres en plusieurs étages, comportent des surfaces d'appui (7) du genre grille et connues en elles-mêmes, de préférence chaque fois pour une couche de briques creuses ou perforées (10) dont les trous sont orientés verticalement, en ce que ces chariots de transport (40 à 43) forment, par leurs parois latérales fermées (3, 4, 5, 6), des puits verticaux (30 à 39), en ce que chaque fois deux puits (30,31; 32,33; 34,35; 36,37; 38,39) disposés l'un à côté de l'autre, sont reliés en haut et en bas par des canaux de guidage d'air (44, 45) et par une soufflante (46) pour réaliser un circuit fermé de guidage d'air et former ainsi une unité de séchage ou de four de cuisson (47, 48, 49, 50, 51) (figure 6).

5. Dispositif selon la revendication 4, caractérisé en ce que plusieurs unités de séchage ou de four de cuisson (47 à 51) sont disposées les unes derrière les autres, et en ce que, comme liaison entre ces unités, sont prévus des canaux de dérivation d'air (52).

6. Dispositif selon les revendications 4 et 5, caractérisé en ce qu'une conduite de gaz chaud (54) d'un brûleur (53) est reliée au circuit d'une unité (49) de sécheur ou de four de cuisson, et en ce que depuis ce circuit, de l'air de dérivation (55) est conduit dans le circuit d'une unité suivante (50) et, depuis celle-ci, dans le circuit d'une autre unité (51), en ce que la direction de circulation (60) des chariots de transport à travers le sécheur ou le four de cuisson, est en sens inverse de la direction d'écoulement d'une unité à l'autre (47 à 51), et en ce que l'unité (49) alimentée par le brûleur à gaz chaud (53), en regardant dans le sens de circulation (60) des chariots de transport, est reliée à au moins une unité de refroidissement (47, 48) dont l'air de sortie (58) est susceptible, le cas échéant, d'être amené au brûleur (53) (figure 7).
